(19) Europäisches Patentamt
European Patent Office
Office européen des brevets

(11) **EP 2 275 789 A1**

(12) **EUROPEAN PATENT APPLICATION**

(43) Date of publication:
**19.01.2011 Bulletin 2011/03**

(51) Int Cl.:
***G01J 3/453*** *(2006.01)*      ***G01B 9/02*** *(2006.01)*

(21) Application number: **10185766.2**

(22) Date of filing: **22.06.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **25.06.2004 US 583151 P**

(62) Document number(s) of the earlier application(s) in accordance with Art. 76 EPC:
**05750484.7 / 1 759 181**

(71) Applicant: **Carag AG**
**6340 Baar (CH)**

(72) Inventors:
- **Manzardo, Omar**
  **2616 Renan (be) (CH)**
- **Schädelin, Felix**
  **3005 Bern (CH)**
- **Herzig, Hans Peter**
  **2000 Neuchâtel (CH)**

- **Noell, Wilfried**
  **2000 Neuchâtel (CH)**
- **De Rooij, Nicolaas**
  **2000 Neuchâtel (CH)**
- **Bühler, Steeve**
  **2608 Courtelary (CH)**
- **Meier, Christoph**
  **2560 Nidau (CH)**

(74) Representative: **Clerc, Natalia**
**Isler & Pedrazzini AG**
**Postfach 1772**
**8027 Zürich (CH)**

Remarks:
This application was filed on 01-10-2010 as a divisional application to the application mentioned under INID code 62.

(54) **Miniature lamellar grating interferometer based on silicon technology**

(57) A Lamellar grating interferometer, especially for use in a spectrometer, comprises a binary grating (11) with front facets and back facets, the front facets being a series of fixed mirrors and the back facets being a series of movable mirrors, wherein a wavefront of a light beam is separated such that one half of the light beam is reflected by the front facets and one half of the light beam is reflected by the back facets. The interferometer further comprises first means for collimating the light beam and second means for focusing the light beam onto the grating, wherein a single minor (9) is used for collimating the light beam and for focusing the light beam onto the grating (11).

Fig. 9

EP 2 275 789 A1

**Description**

TECHNICAL FIELD

The present invention relates to a lamellar grating interferometer, in particular to a lamellar grating interferometer in the form of a microelectromechanical device, i.e. realized with MEMS technology.

BACKGROUND OF THE INVENTION

Micro-Electro-Mechanical Systems (MEMS) stands for the integration of mechanical elements, sensors, actuators, and electronics on a common silicon substrate through microfabrication technology. While the electronics are fabricated using integrated circuit (IC) process sequences (e.g., CMOS, Bipolar, or BICMOS processes), the micromechanical components are fabricated using compatible "micromachining" processes that selectively etch away parts of the silicon wafer or add new structural layers to form the mechanical and electromechanical devices.

Fourier transform (FT) spectroscopy is a well-known technique for measuring the spectra of weak extended sources. It offers distinct throughput and multiplexing advantages, which provide higher signal-to-noise ratio performance than other methods. However, commonly used FT spectrometers require a high-precision mirror scanning mechanism, resulting in large size and high cost. Low cost, miniature spectrometers are key components that can enable the realization of small, portable sensor solutions for applications such as colour measurement and industrial process control.

For spectroscopic applications MEMS technology has already been used in the context of Michelson interferometers, however in view of miniaturisation and in view of having as little optical components as possible, this type of MEMS spectrometers has its drawbacks. A spatially modulated FT spectrometer (e.g. a Michelson interferometer with a tilted mirror and a photodiode array) leads to compactness and has no moving parts. Nevertheless, stationary FT spectrometers have poor resolution and do not benefit entirely from the throughput advantage.

SUMMARY OF THE INVENTION

The object of the present invention is therefore to provide an improved spectrometer element allowing enhanced miniaturisation at high reliability.

The present invention proposes a lamellar grating interferometer comprising first means for collimating a light beam and second means for focusing a light beam onto the grating. This particularly simple but highly effective structure of the optical path in conjunction with the use of a micro electromechanical lamellar grating interferometer makes it possible to have very small components which are rugged and very reliable as well as very precise in terms of available spectroscopic resolution. Data-processing of the signal determined in such a lamellar grating interferometer is based on standard Fourier transform techniques.

According to a first preferred embodiment, the light beam is focused substantially in the form of a line onto the grating.

As already pointed out, preferably the interferometer is based on MEMS technology using a single silicone substrate. Preferentially it comprises a straight row of equally spaced reflection elements, half of which are static and half of which are moveable in a direction substantially perpendicularly to the direction of the row. So the basic principle of operation is analog to the one as described a long time ago by Strong an Vanasse in the Journal of the Optical Society of America, vol. 50(2) on page 113.

Preferably, the period of the grating is in the range of 2-1000 $\mu$m, more preferably in the range of 10-200 $\mu$m, and most preferably in the range of 50-120 $\mu$m, which allows for the first time to analyse much higher frequencies up to the visible and the UV region.

According to a preferred and particularly compact embodiment of the present invention, a single mirror is used for collimating the light beam and for focusing a light beam onto the grating. Preferentially, the same mirror is used for coupling the light onto the lamellar grating interferometer and for collecting light reflected from the lamellar grating interferometer for subsequent detection of the spectrum. The light source, preferably in the form of a multimode fibre, may be located substantially just below or above the row of the grating, and preferably as centred as possible with respect to said row. The light reflected from the grating and collected by the mirror is in turn coupled into a multimode fibre, which is preferably located substantially just below or above the row of the grating and which also is preferably as centred as possible with respect to said row.

According to another preferred embodiment, said mirror is located at a specific distance d from the grating, wherein the mirror has a focal length of approximately f=d in the sagittal plane and a curvature radius of approximately R=2d or a parabolic curvature to avoid spherical aberrations defined as z= ½ y$^2$/R. Possible values for d are in the range of 3 - 100 mm, preferably in the range of 10 - 30 mm.

Preferentially, the mirror is located at a distance d from the grating, wherein in the sagittal plane the mirror has a curvature radius R of approximately R=2d or a parabolic curvature to avoid spherical aberrations defined as z= ½ y$^2$/R.

Of course the beam size in the direction orthogonal to the grating the mirror should be adapted to the height of the grating. If the mirror is located at a distance d from the grating, preferentially in the tangential plane the mirror has a curvature radius R of approximately R=d.

An alternative embodiment uses not a minor but lenses for focusing of the light. In this embodiment, at least two lenses are provided, a first one of these at least two lenses being used for collimating a light beam and a second one of these two lenses being used for focusing the light beam. Preferentially, the second lens in this case is a cylindrical lens.

As already pointed out above, the interferometer is a based on MEMS technology and is highly miniaturised. Correspondingly, preferentially the interferometer comprises a straight row of equally spaced reflection elements with a height in the tangential plane in the range of 10-500 $\mu$m, preferably in the range of 50-150$\mu$m.

A very compact design is possible, if according to another embodiment, the moveable reflection elements of the grating are provided in the form of a fork, which is driven based on electrostatic forces, and wherein said fork preferably has a mass in the range of 10$^{-4}$ - 10$^{-6}$ kg. The driving by means of electrostatic forces is preferentially realised by additional, interlocking forks which also form part of the MEMS-device, wherein these interlocking forks are driven by a potential difference provided between these interlocking forks.

A very high spectroscopic sensitivity and resolution can be realised if, according to another, and particularly preferred embodiment, the fork is driven such as to oscillate substantially with its resonance frequency. To this end, the fork is suspended such as to be freely movable against a mechanical restoring force, which is adapted based on the design and the structure of the MEMS-block. For optimum conditions for the spectroscopic range and the general dimensions being of main interest here, the fork is freely suspended with a force constant in the range of 0.1 - 1000 N/m. Typically, the MEMS block is machined such as to lead to a resonance frequency of the fork in the range of 100 - 400 Hz, preferably in the range of 150 to 250 Hz. The high-frequency resonant mode of operation allows high sensitivity and resolution due to the enhanced stability of the displacement (inherent adjustment) and due to the possible signal averaging enabling high signal-to-noise ratios.

For the optical path differences necessary for the resolution required for the desired spectral ranges between.and including IR and UV, typically a longitudinal displacement of the fork is allowed in the range of 10 - 1000 $\mu$m, more preferably in the range of 50 - 300 $\mu$m, preferably in the range of 100 to 200 $\mu$m. Ideally therefore is driven in resonance such as to lead to such a displacement for example with a resonance frequency in the range of 200 Hz.

In particular in case of the above-mentioned resonant mode of operation it is important to have a reference for being able to allow calibrated spectrum. To this end, according to another preferred embodiment, for calibration a second grating is provided, which is preferably mechanically coupled to the first grating, and this second grating is irradiated with a reference light source, this secondary reference light source may for example be a He/Ne laser. Preferentially in this case, the movable parts of the first and second grating are provided as a one-piece element of a micromechanical device, the first grating facing the opposite side of the second grating of the device, and wherein between the gratings symmetrically (two) fork like elements are provided for electrostatic displacement of the movable one-piece element.

More specifically, another embodiment is **characterised in that** at least one first multimode fibre is provided into which the light collected from a probe to be analysed is collimated and focused, wherein one single mirror is provided for subsequently collimating and focusing said light onto the grating and for collimating and focusing the light reflected from the grating, and wherein a second multimode fibre is provided, into which the collimated and focused light reflected from the grating is coupled for leading it to a detector, wherein at the ends facing the mirror preferentially the first and second multimode fibre are arranged substantially parallel to each other and preferably substantially adjacent to each other either just below or above the row of the grating and centred with respect to said grating.

Furthermore, the present invention relates to the use of an interferometer as detailed above in a spectrometer, in particular in a small-scale, portable spectrometer.

In addition to that, the present invention relates to a method for analyzing wavelengths with an interferometer as given above, wherein light is collimated and then focused.

Further objects and details of the present invention are summarised in the other independent and dependent claims.

SHORT DESCRIPTION OF THE FIGURES

In the accompanying drawings preferred embodiments of the invention are shown in which:

Fig. 1.    Schematics of the lamellar grating interferometer. An incident wavefront is divided by the front and back facets of a binary grating. The optical path difference (OPD) $\delta$ between the beams reflected by the front and back facets is represented by the bold line and is given by Eq. (2). The OPD $\delta$ in function of the diffraction angle $\alpha$ and the depth d of the grating is the sum of the distances AB, BC and CD.

Fig. 2. Intensity *I* of the diffraction pattern of a lamellar grating (see Eq. 1). The intensity *I* is the multiplication of the three contributions $I_1$, $I_2$, and $I_3$ described in the text. The plain line corresponds to a phase shift of $\varphi = M2\pi$, and the dotted line of $\varphi = \pi + M2\pi$ *(M is an integer)*.

Fig. 3. Lamellar grating interferometer. One can distinguish the fixed (light) and mobile (dark) mirrors. The mobile mirrors are actuated by an electrostatic comb drive actuator. The motion is linear. The fabrication technology and the actuation principles are described in Ref[1,3,8].

Fig. 4. Recorded interferogram of a low pressure xenon arc lamp, with an expansion showing the OPD zero.

Fig. 5. Above: Power spectrum retrieved from the interferogram shown in Fig. 4. Below: Spectrum of the same lamp measured with a monochromator having a spectral resolution of 0.5 nm.

Fig. 6. schematic perspective overview of another embodiment using a mirror.

Fig. 7. different perspective view of the device according to Fig. 6.

Fig. 8. schematic simplified representation of the MEMS.

Fig. 9. schematic perspective view of the lighting conditions at the grating.

Fig. 10. schematic perspective views of the MEMS in different states, a) equilibrium state, b) fully retracted fork, c) fully extended fork.

Fig. 11. top view onto a MEMS with two opposite gratings.

Fig. 12. schematic representation of the position of mirror relative to the MEMS- element, a) front view, b) side view.

Fig. 13. schematic representation of the light paths in a setup according to figure 12, a) bottom view, b) side view.

Fig. 14. schematic representation of a possible production process for the mirror, a) perspective representation, b) individual steps seen from the x-direction.

Fig. 15. possible resolution for given actuation voltage shown for a He/Ne Laser, a) step by step, b) resonant mode.

Fig. 16. circuit for actuation of the grating, a) schematic basic diagram, b) detailed diagram.

Fig. 17. schematic circuit for obtaining the position of the grating.

## DETAILED DESCRIPTION OF THE PREFERRED EMBODIMENTS

We present a lamellar grating interferometer realized with MEMS technology. It is used as time-scanning Fourier transform spectrometer. The motion is carried out by an electrostatic comb drive actuator fabricated by silicon micromachining, particularly by silicon-on-insulator technology. For the first time, we have measured the spectrum of an extended white light source with a resolution of 1.6 nm or in a second measurement of 0.5 nm at a wavelength of 400 nm, and of 5.5 nm and of 1.7 nm, respectively at 800 nm. The wavelength accuracy is better than 0.5 nm and the inspected wavelength range extends from 380 nm to 1100 nm of from 300 - 2600 nm, respectively. The optical path difference maximum is 145 $\mu$m or it is 500 $\mu$m in the second case. The dimension of the device is 5 mm x 5 mm or 7 mm x 5 mm in the second case.

Spectrometry is widely used in industry and research labs. The methods are as many as different and are used in a variety of fields. In particular, Fourier transform spectroscopy is a powerful technique to investigate weak sources with high resolution. At present, an extended range of Fourier spectrometers is commercially available. However, high resolution involves an elevated degree of mechanism precision, and therefore large size and high cost. Nowadays, lower resolution miniature spectrometers become attractive because of new applications, expanding opportunities in a remarkable variety of disciplines and industries[1]. Miniaturization could make instruments and sensors easier to handle, faster and cheaper. There are various applications including color measurements, quality and process control, gas detection and chemicals analysis. Compact spectrometers are convenient in a diversity of fields like environmental monitoring, food and beverage industry, imagery, telecommunication, life science and medical diagnostics. Other specific aspects, like dimensions and fabrication costs, play an important role motivating the realization of small, portable sensor solutions. Most of the compact spectrometers use the dispersive effect of a grating. Very few examples of miniature instruments exploiting the advantages of Fourier spectroscopy have been developed[2]; the reason is the high accuracy needed for the fabrication. Thanks to MEMS (micro-electro-mechanical systems) technology, using silicon micromachining, Fourier spectrometers can enter a new era.

In a former paper[3], we presented a Fourier spectrometer based on SOI (silicon-on-insulator) technology. The device was a Michelson interferometer with a scanning mirror. In this particular configuration, the constraint is the necessity of incorporating the beamsplitter. In fact, the integration of dedicated micro-optical elements into micromechanical systems becomes a fabrication and handling issue. In addition, among different spectroscopic techniques exploiting MEMS technology[4,5], broad band measurements with a reasonable resolution is an issue. In this letter, we report on a MEMS-based Fourier spectrometer based on a lamellar grating interferometer. This concept provides the advantage of avoiding the integration of the beamsplitter. The device is capable to record white light spectra with a resolution comparable with commercially available miniature grating spectrometer. The fabrication technology and the actuation concept are similar to the Michelson interferometer presented in Ref.[3].

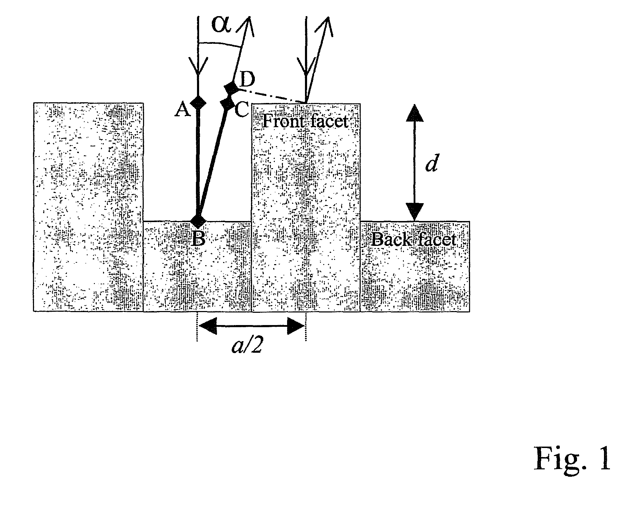

A lamellar grating interferometer is a binary grating with a variable depth, which operates in the zero order of the diffraction pattern. This type of apparatus was invented by Strong[6] in 1960. The lamellar grating interferometer is used as Fourier spectrometer, but contrary to the Michelson interferometer that splits wave amplitudes at the beamsplitter, it divides the wavefront. At the grating, the wavefront is separated such that one half of the beam is reflected by the front facets (fixed mirrors) and one half from the back facets (mobile mirrors). The distance $d$ between the two series of mirrors determines the optical path difference (OPD) $\delta$ between the two parts of the wave (see Fig. 1). In general, this type of spectrometer is used for wavelengths larger than 100 $\mu$m; below, the tolerances are too tight for most machine shops. Silicon micromachining is the ideal technology to overcome these limitations for shorter wavelengths.

The intensity $I$ of the diffraction pattern is given by[6]

$$I \propto \underbrace{\left[\frac{\sin K}{K}\right]^2}_{I_1} \cdot \underbrace{\left[\frac{\sin 2nK}{\sin 2K}\right]^2}_{I_2} \cdot \underbrace{\cos^2\left(\frac{\varphi}{2}\right)}_{I_3}, \tag{1}$$

where: $K = \dfrac{\pi a}{2\lambda}\sin\alpha$, $n$ is the number of illuminated periods, $\alpha$ is the grating period and $\alpha$ is the diffraction angle. The phase shift $\varphi = \dfrac{2\pi}{\lambda}\delta$ is given by the OPD $\delta$, which is the sum of the distances AB, BC and CD in Fig. 1:

$$\delta = d\left(1 + \cos\alpha + \frac{a}{2d}\sin\alpha\right). \tag{2}$$

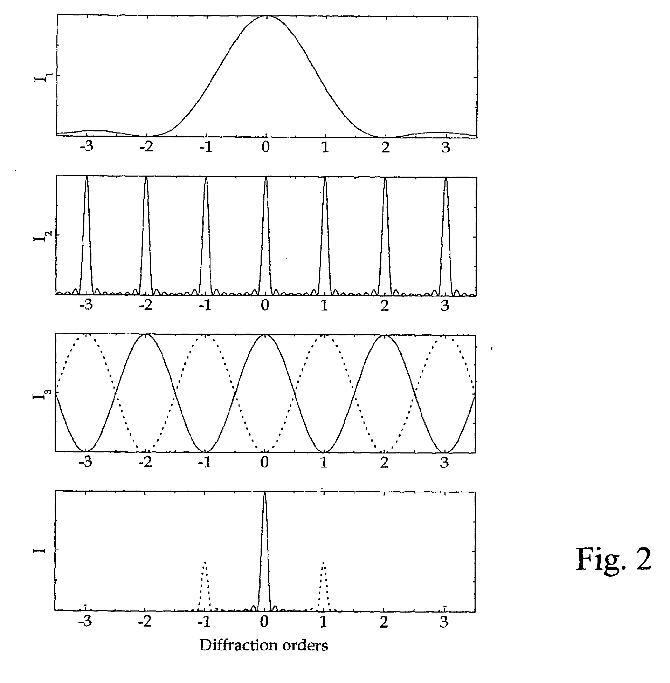

The intensity $I$ of the diffraction pattern given by Eq. (1) has three contributions: $I_1$ is the sinc[2] function resulting from the rectangular shape of the grating period; $I_2$ is the comb function due to the periodicity of the grating (number of period $n$ and grating period $\alpha$); finally, $I_3$ determines the phase shift due to the grating depth $d$. These contributions are illustrated in Fig. 2 for a phase shift corresponding to $\varphi = M2\pi$ and $\varphi = \pi + M2\pi$ ($M\tau\sigma \ \alpha\nu \ \tau\nu\tau\epsilon\gamma\epsilon\rho$). When $\alpha = 0$ (zero order of the diffraction pattern), Eq. (1) gives that the intensity $I$ modulates like a cosine in function of the OPD $\delta = 2d$. The period of the modulation depends on the wavelength $\lambda$. As a consequence, the basic equation of Fourier transform spectroscopy[7],

$$B(\sigma) = \int_{-\infty}^{\infty} I(\delta)\exp(-i2\pi\sigma\delta)\mathrm{d}\delta, \tag{3}$$

where $\sigma = 1/\lambda$, is the wavenumber, applies to the lamellar grating interferometer. Like in the case of the Michelson interferometer, the relation between $I$ and $\delta$ is known as the interferogram and the power spectrum $B(\sigma)$ is the Fourier transform of the recorded intensity $I(\delta)$.

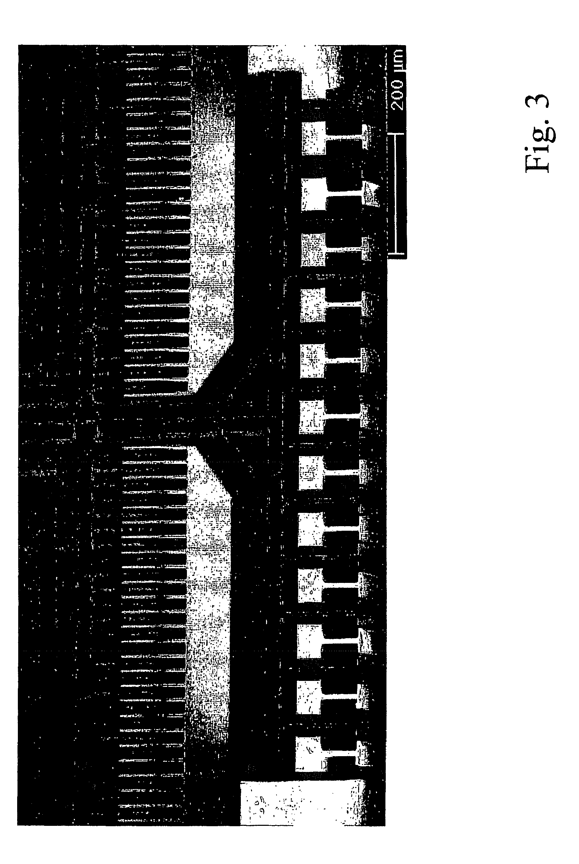

A scanning electron microscopy photograph of the lamellar grating interferometer is shown in Fig. 3. The motion of the series of mirrors is carried out by an electrostatic comb drive actuator. The design concept and actuation principles are described in Ref[1] and a diagram of operation is shown in Ref[3]. The actuator is fabricated by deep reactive ion etching (DRIE) of a SOI wafer. The fabrication process is described in Ref.[8]. The height of the mirrors is 75 $\mu$m, the number of illuminated periods n of the grating is 12, the grating period is 90 $\mu$m or 100 $\mu$m and the total dimension of the device is 5 mm x 5 mm or 5 mm x 5 mm. The quality of the surface of the mirrors is ensured by the fabrication technology. The surface roughness has been measured to be 36 nm rms.

In order to demonstrate the ability of the spectrometer to inspect wide wavelength ranges with good resolution and accuracy, the spectrum of a low pressure xenon arc lamp was measured. The measurement was carried out by collimating the output light of a multimode fiber with a core diameter of 50 $\mu$m, and by focusing the light beam with a cylindrical lens onto the grating. The focal length of the collimation lens is 10 mm and the focal length of the cylindrical lens is 20 mm. The angle of incidence of the beam is zero and the modulation of the zero order in function of the OPD

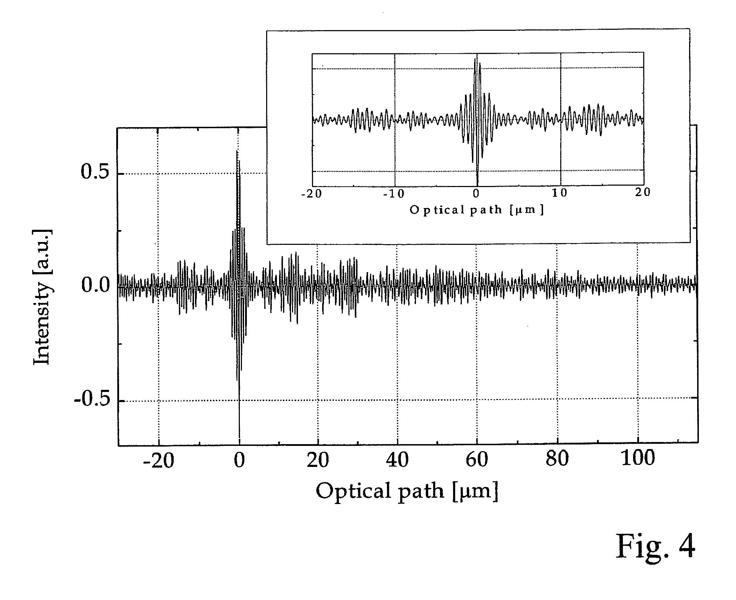

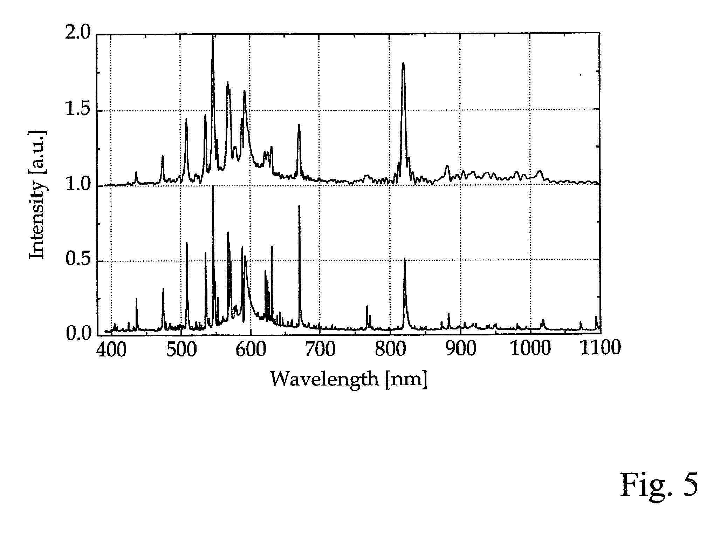

$\delta$ is measured with a photodiode detector. The recorded interferogram is shown in Fig. 4. The quality of the fringes and the symmetry of the interferogram demonstrate that there is no dispersive effect in the interferometer that could arise from the partially collimated beam. The center of the interferogram corresponds to the OPD zero. The OPD maximum achieved in this experiment is 145 $\mu$m, but this may go up to 500 $\mu$m, which leads to a theoretical resolution of 70 cm$^{-1}$, but also 20 cm$^{-1}$ are possible, corresponding to a theoretical resolution of 2.8 nm or 1 nm, respectively, at a wavelength of 633 nm. In order to reach the OPD maximum, a voltage of 65 V has been applied between the combs. For the calibration of the mirror position versus the applied voltage, a He-Ne laser was used. The OPD was corrected following the phase correction described in Ref[3]. The recording of the interferogram was undertaken by moving the mirrors step by step and by acquiring 100 measurements at each step (automated procedure). The number of steps was 3000 and the total measurement time was 5 minutes. The power spectrum retrieved by the Fourier transform of the interferogram is shown in Fig. 5. The spectrum recovered from the lamellar grating interferometer is compared with the spectrum measurement carried out with a monochromator (Jobin Yvon HR 460) having a spectral resolution of 0.5 nm. One can see that the complex spectral structures of the xenon source coincide. The position accuracy of the emission peaks is better than 0.5 nm. The measured resolution is 1.6 nm or 0.5 nm at $\lambda$ = 400 nm, and 5.5 nm or 1.7 nm at $\lambda$ = 800 nm. The wavelength range extends from 380 nm to 1100 nm or from 300 nm to 2600 nm. Note that the device was not coated in the first case. Therefore, almost no spectral contribution is seen beyond 1050 nm. In fact, beyond this wavelength, silicon becomes transparent and therefore only 30 % of the incident light (Fresnel reflection) is reflected back by the mirrors. Depending on the required applications, the device can be coated as in the second case, e.g. with aluminum or gold.

A miniature MEMS-based lamellar grating spectrometer has been realized. The dimension of the MEMS chip is 5 mm x 5 mm or 7 mm x 5 mm in the second case. The ability of the device to measure wide wavelength range spectra has been demonstrated.

For the first time, from the measured spectrum of a xenon source, it has been shown that this device is perfectly suitable for a variety of applications in the visible and the near-infrared. Compared with grating-based instruments, this device exploits the advantages of Fourier spectroscopy without the need of a beamsplitter. In addition, a single pixel detector is used instead of a CCD line.

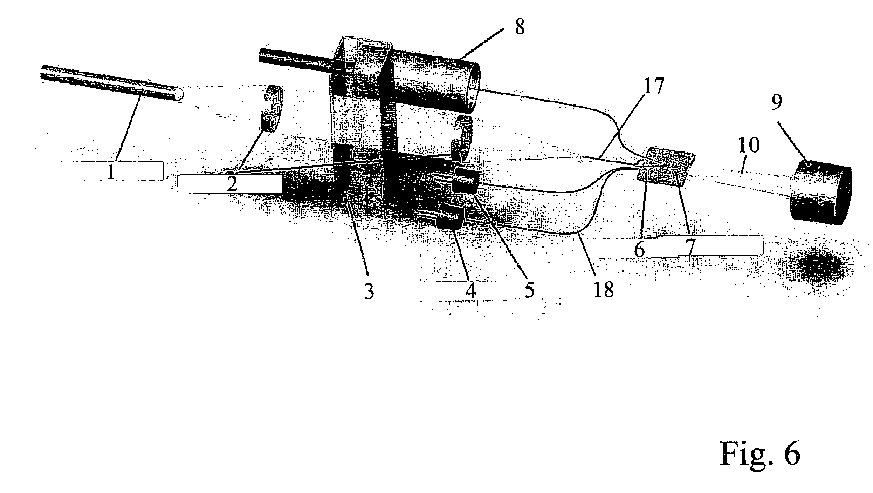

Figure 6 shows another embodiment of the present invention, in which the light beams are collimated and focused onto the grating by means of a mirror 9, which at the same time serves for collecting the light reflected from the grating.

In this case, the light beam of a white light source 1 is first collimated by means of a first lens 2, is subsequently passed through a sample cuvette, which may for example be a sample of a suspension like milk or more specifically mother's milk. The transmitted light beam is subsequently focused and coupled by another lens 2 into a fibre 17.

The light of this fibre 17 is subsequently directed towards a mirror 9, reflected from this mirror 9 onto a grating 11, which forms part of a lamellar grating interferometer which is realised by means of a micro electro mechanical device MEMS 7, which is mounted on a MEMS holder 6, as is the fibre 17.

The light reflected from this grating 11 is reflected onto the same mirror 9, and focused and coupled by this same mirror 9 into a second multimode fibre 18, which is also fastened to the holder 6. The light guided by this second multimode fibre 18 is subsequently fed into a detection device 4.

In this detection device generally an analog to digital converter (ADC) is provided, which samples the data at a sampling rate sufficient for the desired resolution, and these data are subsequently treated by means of a computer assisted Fourier transformation (e.g. FFT) to yield the spectrum.

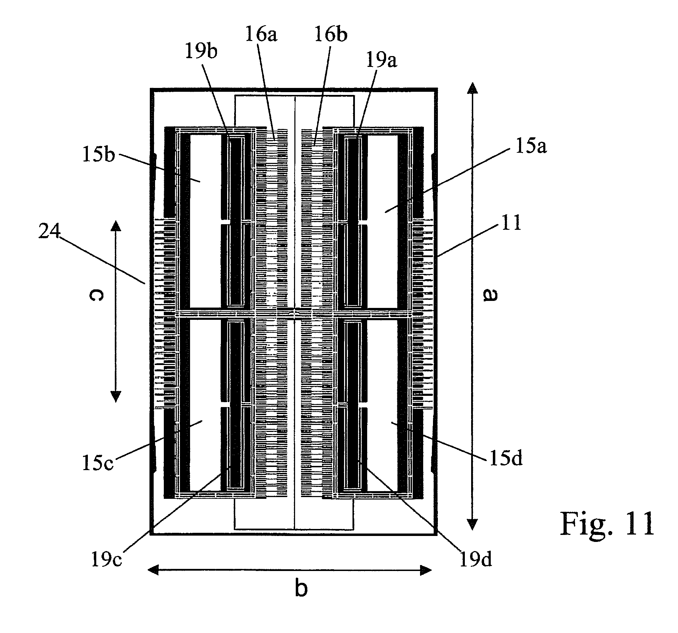

In order to have a reference for calibration of the spectral data a reference light source 8 is provided, which for example can be a He/Ne laser. The light from this reference light source 8 is also guided to the MEMS 7 by means of a multimode fibre. The MEMS-block 7 is, on the side opposite to the side facing the mirror 6, provided with a second grating 24 for the reference light. The light from this multimode fibre is directed on to this second grating 24 (see also Fig. 11), the reflected light is coupled into another multimode fibre and guided to a reference detector 5.

The spectral data collected by this reference detector 5 can be treated in analogy as given above for the detector 4, direct multiplication or combination with the data from detector 4 may however also be possible. Since the first grating 11 for the sample light and the second grating 24 for the reference light are realised by using a one-piece mechanical unit (see below), the reference can be used very efficiently and stably.

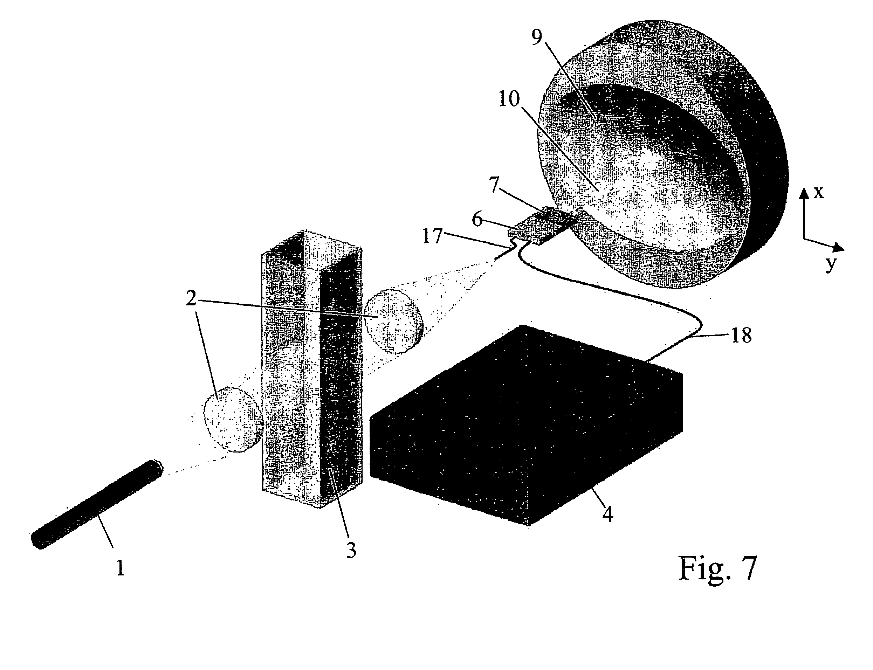

Figure 7 gives a more detailed and slightly simplified (no reference light beam) view onto the mirror 9. It can be recognised that the mirror 9 has a very specific reflection surface, which shall be discussed in detail further below.

The reflection surface is asymmetric and therefore for further discussion a coordinate system shall be defined, in which the y-axis is substantially parallel to the direction of the main front line of the grating. The long main axis of the ellipsoid-type mirror surface lies parallel to this y-axis, and the plane defined by the y-axis and the average travelling direction of the light beam from the MEMS to the mirror (z-direction) is also called the sagittal optical plane.

Orthogonal to the y-axis there is the x-axis, which lies parallel to the small main axis of the mirror surface. This plane defined by this x-axis together with the average travelling direction of the light beam from the MEMS to the mirror is commonly called the tangential plane.

Most often in Fourier transform spectroscopy one uses the Michelson interferometer principle or a similar optical configuration (like the Twyman-Green interferometer). The lamellar grating interferometer is generally used for wavelengths above 100 μm because no beam splitter is efficient at those wavelengths. Furthermore, no lamellar grating interferometer is used below these wavelengths, because the fabrication specifications of the lamellar grating interferometer are far too high for most machine shops using common/known machining techniques.

The fabrication of the mirrors which form the grating is carried out with MEMS technology, precisely with SOI technology. The whole MEMS device and also the actuator is fabricated by deep reactive ion etching (DRIE) of a SOI wafer (see Ref. 8). The front faces of the mirror may be coated e.g. by vapour deposition of Ag or Au.

The use of a SOI-based comb drive actuator (see also below) allows using a lamellar grating interferometer for wavelength below 5 microns.

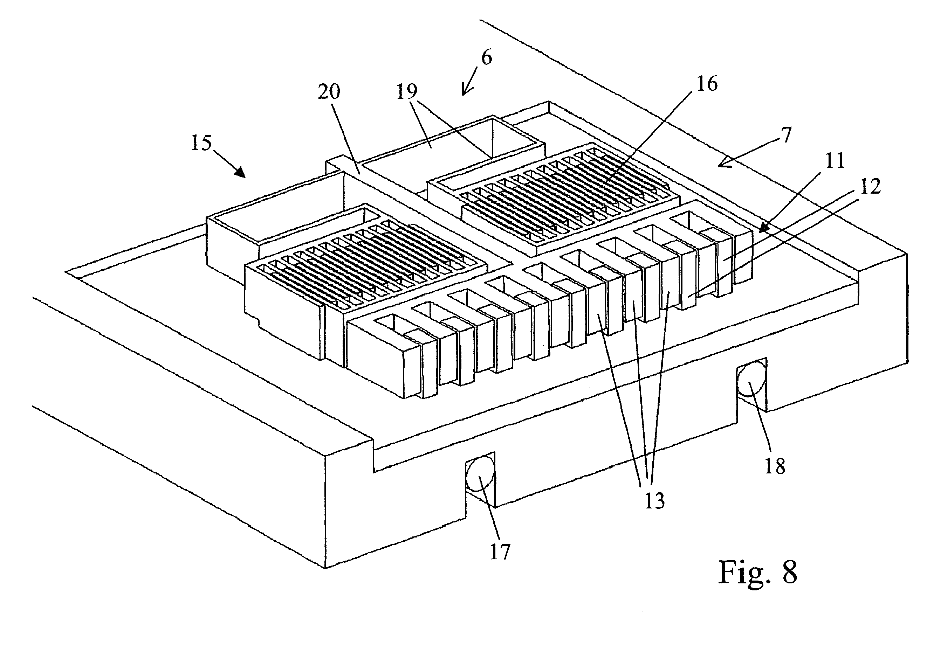

In a simplified display, in figure 8 the MEMS element is shown. The actual MEMS element 7 is mounted on a holder 6. The MEMS 7 consists of the actual grating 11, which is used for reflecting and finally for indirectly separating the light into its spectral components.

The grating 11 consists of a row of alternatingly stationary (reference numerals 12, fixed to or part of the basis) and movable (reference numerals 13) small mirrors. The movable elements 13 are joined to form a fork 14 on the side opposite to the mirror side of the grating 11.

This fork 14 is suspended on a suspension 15 which allows the fork 14 to move in a direction parallel to the main travelling direction of the light, i.e. along the z-axis. To this end, the fork comprises a central axis element 20, which is connected to the stationary basis by means of a spring element 19 which establishes a restoring force from the equilibrium z-position, as it is displayed in figure 8. The material strength and quality in the spring element region 19 is chosen such as to lead to the desired restoring force for the resonant mode as discussed in more detail below.

The MEMS in addition to that comprises means for actuating the fork 14 of the grating 11. Actuation is effected by electrostatic interaction with static parts, and to this end, there is provided at driving comb actuator 16, which comprises a stationary comb-like part and a movable comb-like part interlocking therewith, wherein the movable comb-like part is connected to or forms part of the whole fork element 14.

Driving of the whole unit is effected by providing an alternating electrostatic potential between the two comb-like elements (for details see below), so a capacitive actuation is used.

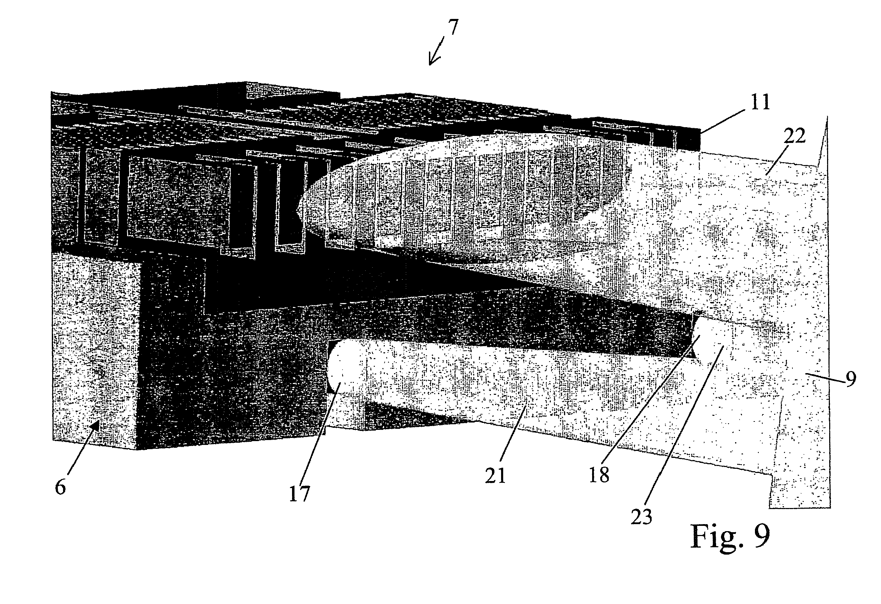

The light path in the region of the grating is given in a perspective view in figure 9. The multimode fibre 17 is held in a corresponding recess or slot or hole in the bottom face of the MEMS-holder 6. The light emitted by this input-fibre 17 is directed towards the mirror 9, a reflected and at the same time collimated and focused on to the grating 11.

The light which is reflected by.the grating 11 with the associated interference depending on the position of the movable part relative to the stationary part of the elements of the grating is again reflected to the same mirror 9, which is designed such as to reflect and collimate and focus this reflected light onto a second fibre 18 which is also housed in a recess/slot/hole in the bottom face of the MEMS-holder 6.

This second multimode fibre 18 is preferentially located parallel to the first fibre 17 and it may also be more closely adjacent to the first fibre. As given in figure 9, the two fibres 17 and 18 are preferentially located symmetrically with respect to the extension of the grating 11 in the y-direction.

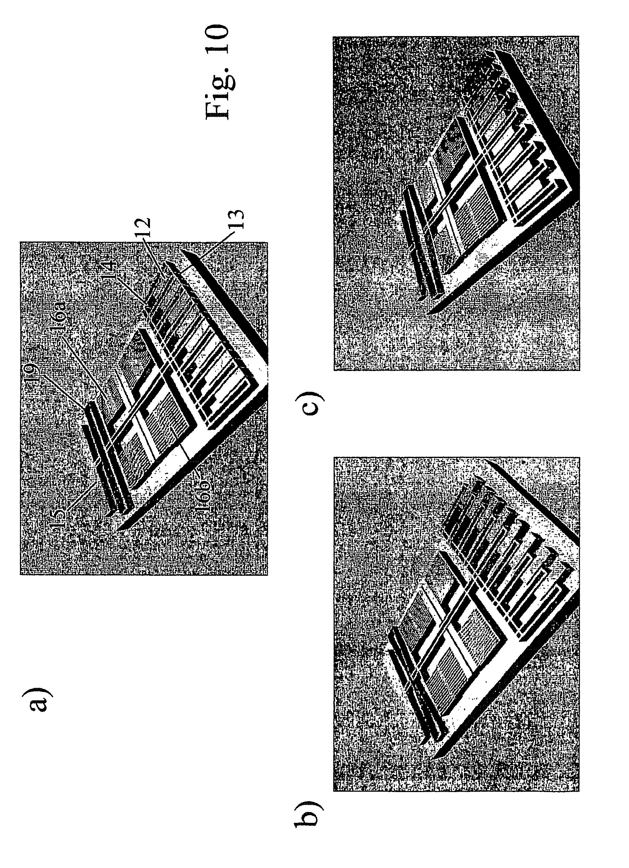

Figure 10 gives another embodiment of the MEMS-element 7 at the same time detailing the different positions of the fork 14. In this case, the suspension 15 is provided at the side opposite to the grating side of the element. The whole fork 14 is suspended on this suspension 15 and is basically freely swinging with a small spacing from the bottom surface of the device, wherein this spacing is typically in the range of 1 - 3 μm (?? Please advise??).

Between the actual grating and the suspension there is in this case provided two anti-symmetrically structured comb drive actuators 16a and 16b. The two actuators 16a and 16b are designed such that they are quasi self compensating, i.e. if a motion along z is initiated, one of the actuators of the two comb drive actuators are contracted while at the same time in the other of the actuators the two comb drive actuators are distanced.

This can be seen specifically in the two figures 10b) and c). While in figure 10a) the equilibrium position is shown, i.e. the situation, when there is no force acting on to the fork 14, and when the front surfaces 13 of the fork are substantially in line with the stationary elements 12 of the grating, figure 10b) shows the situation, in which the fork is almost maximally retracted. One can see that in this case the spring element 19 is compressed leading to a restoring force in the direction of the mirror 9. At the same time the first comb actuator 16a is in its extended position, while the second comb actuator 16b is in its contracted position.

On the other hand, figure 10c) shows the situation, when the fork is in its substantially maximally extended position, such that the front surfaces 13 of the fork 14 protrude between the stationary elements 12 of the grating 11. In this situation, the first comb actuator 16a is fully contracted, while the second comb actuator 16b is in its extended position.

By means of this countermotion of the two actuators 16a and 16b, nonlinearities and the like in the actuation of the fork 14 can be minimised.

Yet another embodiment of the MEMS-element 7 is shown in a top view in figure 11. In this case, an embodiment is shown, in which a reference light beam as shown schematically in figure 6 can be directed onto the same MEMS-element 7 from the opposite side to the one for the sample-light beam.

In this specific case, there is a first grating 11 on the one side, which is used for the light beam reflected from the mirror 9. On the opposite side, there is provided a second grating 24, which can be used for the reference light beam. The forks of the two gratings 11 and 24 are given as a one-piece unit, which is suspended at four positions 15a-d. At each of these suspension points there is provided a spring-like element 19a-19d.

Centrally, there is provided again the two anti-symmetrically structured comb actuators 16a and 16b.

Also given in figure 11 are possible dimensions of such a device. In the y-direction the whole element or its supporting holder may have a full width of a = 7500 $\mu$m, the gratings may have a width c = 3200 $\mu$m, and in the z-direction a depth in the range of 4850 $\mu$m is possible. In the x-direction the gratings have a height in the range of approximately 75 $\mu$m, and the grating has a grating period of 50 - 200 $\mu$m, in this specific case of 100 $\mu$m, which allows to separate wavelengths down to 400 nm.

Typically, a displacement of the fork away from the equilibrium position in the range of 120 $\mu$m is possible. This leads to an optical path difference OPD of approximately 240$\mu$ m. However, OPD's up to 1 mm are possible.

One key to this embodiment is the actual design of the mirror 9, as it allows enhanced miniaturisation of the whole device.

The optic has to realize two main functionalities:

- Plane wavefront creation (in the direction of the grating 11)

- Adaptation of the energy distribution to MEMS's shape

On the other hand, due to the principle of the lamellar Fourier spectrometer, constraints appear such as:

- Diffraction order separability

- Minimum loss over the whole MOEMS's actuation range.

In general, beam shaping is carried out with several optical elements (mirrors or lenses) according to the state of the art. This statement is particularly true when a low cost and rugged architecture is desired as is the case here. In general, each individual optical element is made of planar or spherical surfaces (because fabrication is simple). These optical components are placed sequentially and are chosen to compensate for typical optical aberrations like spherical and chromatic aberrations. When higher costs can be afforded, non spherical shapes (called aspheres) can be used as optical elements. Nevertheless, the fabrication of such components is not straightforward. In addition, the optical element mostly will have an axial symmetry (axis parallel to the propagation direction), limiting the types of shapes.

When considering small optical elements (between 2 and 5 mm), aspheres with several axial symmetries becomes complex. In the present particular case, one needs a spherical combined with a parabolic element (see below).

Particular advantages of the proposed approach are as follows

- Beam shaping is reduced to one single optical element.

- This configuration reduces

    ○ a/ assembly tolerances
    ○ b/ size
    ○ c/ costs

- The mirror is reducing optical aberrations (both chromatic and spherical aberrations)

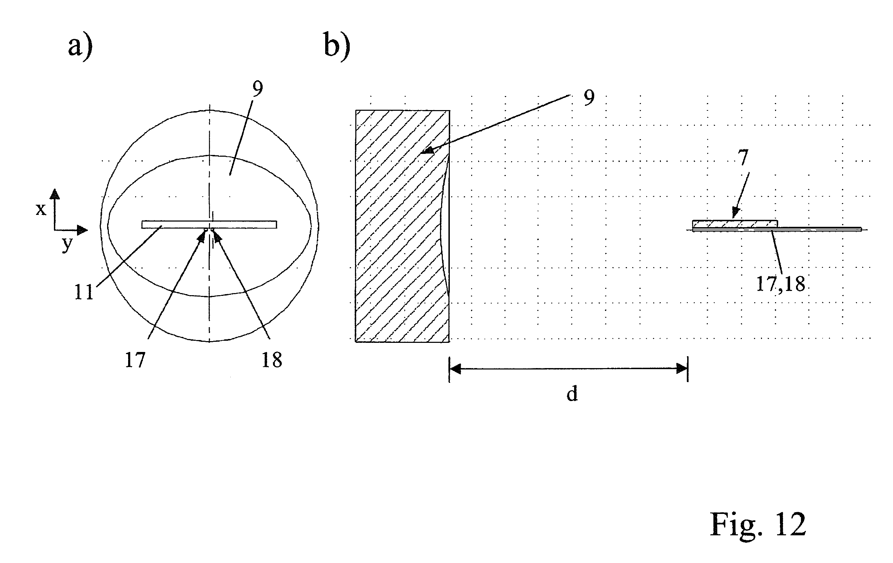

Fig. 12 illustrates the global concept. MEMS and light source are superposed. The mirror 9 is oriented allowing light to be re-coupled in the detection fiber 18.

The shape of the grating 11 of the MEMS 7 is rectangular with dimensions 3.2mm x 75$\mu$m. The energy of the source (the output of the fibre 17) should be brought integrally on this surface of the grating 11. Thus, the optic has to be astigmatic. In the sagittal plane (y-z-plane), light rays have to be collimated: In the tangential plane (x-z-plane), image formation with M=1 has to be realized. Thus, focal lengths of the mirror 9 should be

$$f_x = d$$

$$f_y = d/2$$

where d is the distance between the source (grating and fibres 17,18) and the mirror 9.

Depending on the Numerical Aperture (NA) of the source (17, 18), the length d, respectively $f_x$, has to be chosen to obtain a beam size of 3.2mm in the x-direction:

$$f_x \sim 3.2/(2\,NA)$$

Diffraction Order Separability: To maximise the contrast of the signal, the 0-order diffraction peak has to be isolated. Related to the source size a and to the periodicity of the mirror A, the focal length $f_x$ has to be chosen big enough to avoid superposition.

For a given wavelength $\lambda$, one finds

$$f_x <= a\,\Lambda/\lambda$$

With numerical values (a=50$\mu$m , $\Lambda$=100$\mu$m , for the worst situation $\lambda$=400nm)

$$f_x >= 250\,a = 12.5mm$$

Losses: Due to the fact that half of the mirrors are moving, their position will not correspond to the designed image- (for illumination) or object-field (for fiber-coupling). It means that the quantity of light reflected from the movable mirrors to the fiber will change with position. The result will be a contrast reduction of the signal.

Regarding the mirror position, two different aspects will play a role:

- illumination variation

- fiber-coupling efficiency

Illumination variations are based on the variation of the illumination area with the variation of the position of the two surfaces 12 and 13. In the present case, the effect takes place only in one direction (astigmatic system).

Fiber-Coupling Efficiency: light reflected from the surfaces 12, 13 of the MEMS-element is imaged on the detection-fiber 18. The ideal object-field is positioned at the fixed-mirror location. For mobile mirrors, the object-field will change and respectively its image-field. In consequence, the image on the fiber will loose in sharpness, meaning losses.

Mirror Design:

Sagittal Plane

Paraxial Approximation: One admits first a paraxial on-axis optical system with a point light source. For collimating the beam, the condition for the focal length of the mirror is

$$f = d$$

where d is the distance between the light source 17 and the mirror 9. The focal length is given with respect to the curvature radius by

$$f = R/2.$$

One obtains for the radius

$$R = 2\ d.$$

Spherical Aberration Correction: To avoid spherical aberrations (the only existing one in a on-axis optical system), the curvature of the mirror cannot be a radius. By using the Fermat Principle, the perfect curve is a parabola defined as

$$z = \alpha\ y^2$$

Knowing that the paraxial approximation of this curve gives the radius from last section and doing «reverse engineering», one can go back from the paraxial curve to the parabolic one. The functional description of the radius is

$$z = R - sqrt(R^2 - y^2)$$

Taking the first order Taylor expansion

$$z \approx 1/(2\ R)\ y^2$$

$\alpha$ is then given as

$$\alpha = 1/(2\ R) = 1/(4\ f)$$

Tangential Plane:

In this plane, the light source has to be refocused on the grating surface of the MEMS. By positioning the light source 17 directly below the MEMS grating, the distances object-mirror and mirror-MEMS are the same. This gives a magnification factor M=1. It then follows that the perfect mirror curve, imaging the point light source onto itself, is a radius with R=d . No aberration results from this curve.
For the present situation the following parameters can be chosen

- f = 15mm : focal distance of the mirrror

- a = 0.05mm : source and detection size

- h = 0.075mm : MEMS height

- D = 6mm : Aperture stop diameter

As mentioned, no aberration will occur. The diffraction limit is achieved. Only the aperture of the optical system will limit the point spread function. The curve for the on-axis field (x=0, y=0) is perfectly superposed onto the reference diffraction limited curve.

The MEMS and the source will be superposed. Both emission 17 and reception 18 fibers are mounted close to each other. In this case, the system will not be on-axis any more. The coordinates from the source versus the optical axis is chosen to be x=0.1, y=0.2. Aberrations will occur. The curve is no more superposed on the diffraction limited one. These effects can be partially remedied by "defocusing", it means by changing the distance source-mirror. This way, an almost diffraction free situation can be achieved.

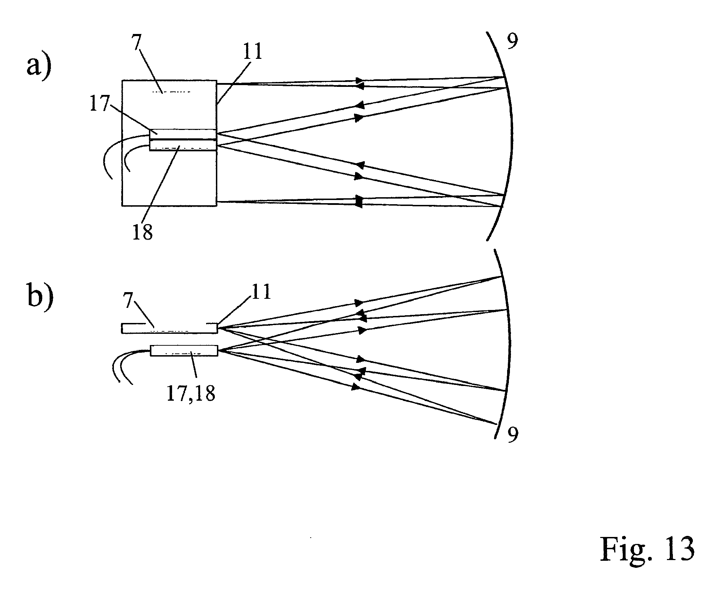

Using the above calculated shape for the mirror 9, the light paths as indicated in figure 13 are obtained. In figure 13a) view from the bottom is shown, and it can be seen that in this y-direction of the shape of the mirror 9 has to be chosen to be parabolic such as to collimate the light emitted by fibre 17 onto the full width of the grating and such as to refocus the reflected light onto the detection fibre 18.

In the tangential plane as given in figure 13b), a purely radial shape of the mirror 9 is sufficient for focusing the light from the fibre 17 onto the grating and the way back.

In this respect the question arises how to actually manufacture a mirror 9 which in one direction (x-axis) has a purely radial shape, while in the orthogonal direction (y-axis) it should have a parabolic curvature.

Nowadays, materials are generally shaped by turning, grinding and/or polishing. All these methods are either not adapted to fabricate elements with optical quality, or do not allow fabricating elements having more than one unique axial symmetry (along the optical axis).

The present idea is to use planing with a diamond tool. This technique is remarkable since it allows fabricating a variety of shapes, like the mirror shape discussed above. In addition, the quality of the surfaces is as good as the one of commercially available optical elements. Thereby a rapid and cheap manner to fabricate the mirror dedicated to the lamellar grating interferometer is available.

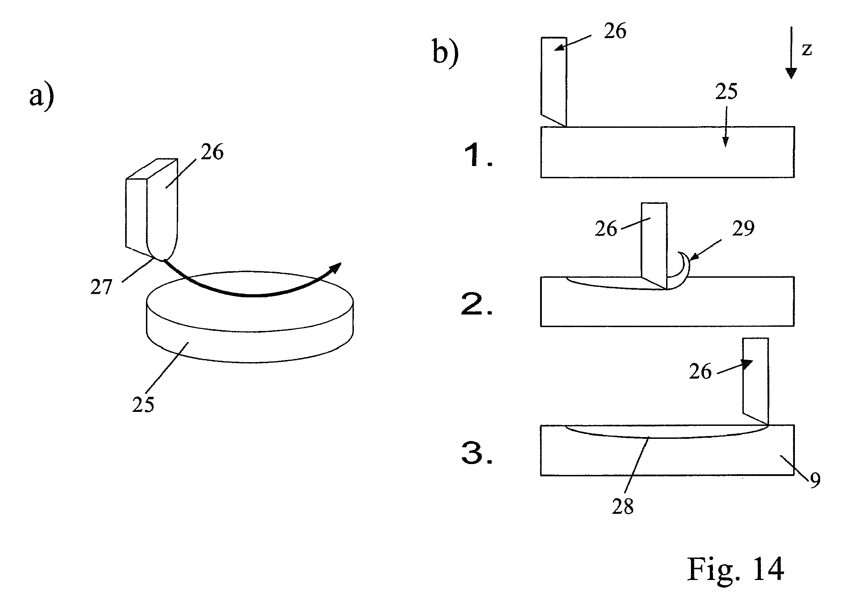

Such a possibility for manufacturing such a mirror is displayed in figure 14. A specific diamond planing tool 26 is designed which has an edge which corresponds to the radial curvature in the x-direction. This tool 26 is subsequently guided along a trajectory as displayed in the steps 1. - 3. in figure 14 b) along the y-direction wherein the down and subsequent up motion of the tool 26 follows the parabolic curvature in the y-z-plane as needed for the sagittal curvature.

Usually, in Fourier transform spectroscopy, measurements are carried out (a) in step-by-step mode or (b) in continuous rapid scan mode. In mode (a), the measurement is more accurate, but requires a long recording time. In mode (b), the measurement time is shorter and the mirror is continuously scanned. In general, mode (a) is chosen for high resolution measurements and mode (b) for rather poor resolution but quick measurement. The continuity of the scanning mode (b) does not imply a resonance mode, since the actuated mirror according to the state of the art has a mass that is too large to have an interesting resonance frequency (>100Hz). An interesting resonance frequency means: enhanced distance scanning (because of the resonance property), rapid measurement time and affordable vibrations (a 100g mirror moving at 100Hz will cause deleterious shakings/vibrations in the whole system).

In Fourier transform spectroscopy, besides the argument mentioned here above, resonance is not requested

(1) because speeds higher than 100Hz are not an asset,

(2) because detectors are not fast enough to record light modulations corresponding to such high frequencies.

Argument (2) is true for wavelengths above 2 $\mu$m. Indeed, the light modulation generated by a rapid-scan mirror (> 100Hz) can be as high as 1 to 5 MHz (band pass). For wavelengths above 2 $\mu$m, it is extremely difficult to have detectors achieving a good band pass together with a good sensitivity (signal-to-noise ratio would be poor). Therefore in general, Fourier spectrometers are only operated at wavelength above 2 $\mu$m.

In SOI-based comb actuated devices operated in mode (a), long distances are not easily achieved because of lateral mechanical instability (i.e. electrostatic combs tend to stitch together).

Considering the above, the present additional idea consists in exploiting the small mass of the scanning mirror 13/14 in order achieve an interesting resonance frequency. The small mass is achieved because of the fabrication technology (silicon micro-technology allows to build micro-components). The design of the scanning mirrors is made in such a way that the resonance frequency will exceed 100Hz in order to profit from the stability that is intrinsic of a resonant effect and in order to achieve short measurement times. In addition, because the device is resonating, the maximum scanning distance is drastically increased for the same applied voltage.

In this respect attention is drawn to the following correlation between an applied voltage for the actuation and the achievable resolution: Consider the spectrum of a HeNe laser.

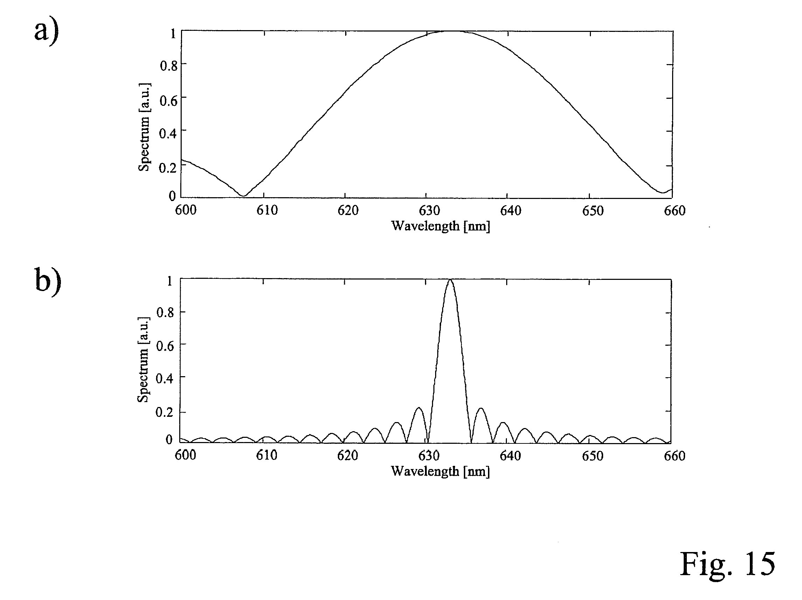

Figure 15 a): (Step-by-step mode) The optical path difference is 10 $\mu$m and the applied voltage is 10V.

Figure 15 b): (resonance mode, 200 Hz) The optical path difference is 100 $\mu$m and the applied voltage is 10V, too.

One notices that, for the same applied voltage between the step-by-step mode and the resonance mode, the resolution has increased by a factor 10. Indeed, the resolution becomes better with increasing of the optical path difference

maximum (OPD$_{max}$) that can be achieved with the scanning mirrors:

$$\text{resolution}: \quad \delta\lambda = \lambda^2/\text{OPD}_{max}.$$

Furthermore, in order to increase the maximum scanning distance realized in resonance, the device may be actuated in vacuum. This feature will reduce the effect of damping arising from the friction with air, which is non negligible when dimensions are scaled down to some tens of microns.

When considering SOI-based comb drive actuation, the actuation is easily realized in resonance. Furthermore, it corresponds to a natural way to move tiny structures, particularly at interesting frequencies. Indeed, specific electronic circuitry can operate such comb drive actuator efficiently (see below). Because of the small weight of the mobile structures, no overall vibration is generated by the motion of the structures.

For wavelengths below 2 $\mu$m, standard photodiode detectors can be used. They have the required band pass characteristics to allow the recording of high frequency modulation (up to 5MHz). This allows the use of Fourier transform spectroscopy, instead of grating-based spectroscopy.

Long scanning distances can be achieved because of resonance enhancement. This aspect allows overcoming the issue of stitching between electrostatic combs at long scanning distances.

The motion stability that is induced by the resonance mode allows avoiding permanent laser calibration. The resonance mode enhances motion precision and therefore allows a pre-calibration of the position of the mirrors.

In the present case, the mass of the fork 14 is chosen in the range of $10^{-4}$ - $10^{-6}$ kg, and the force constant in the range of 0.1 to 1000 N/m.

The corresponding resonance frequencies can easily be calculated, typical values as in the present embodiments are around 200 Hz. This means that every 1/200 sec a spectrum is recorded, and signal averaging can be carried out for enhancing the signal-to-noise ratio very efficiently.

Capacitance measurement in a comb drive actuator can be carried out

(a) with an additional actuator which is only used for the capacitance measurement and not for the actuation, or

(b) with actuators that are not electro-statically actuated (e.g. an accelerometer).

A particular circuit has been developed for resonating a MEMS-based actuator. Step-by-step actuation requires complex and stable circuitry operating at high voltages.

The presently proposed novel idea in terms of the circuitry for resonant actuation is to use the capability of measuring the capacitance together with a circuit letting the actuator resonate.

Particular advantages are as follows:

• Simplicity of the circuit

• Low voltages are used. As a consequence, the 5V output provided by an USB plug can be used.

• The position of the mirror can exactly be monitored for compensating eventual motion distortion that could not be taken into account with the pre-calibration (see above).

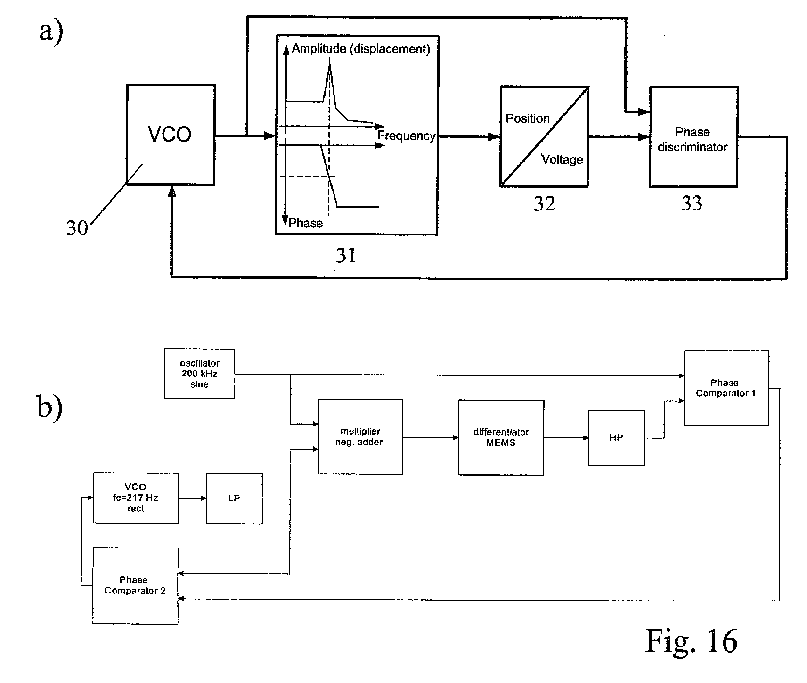

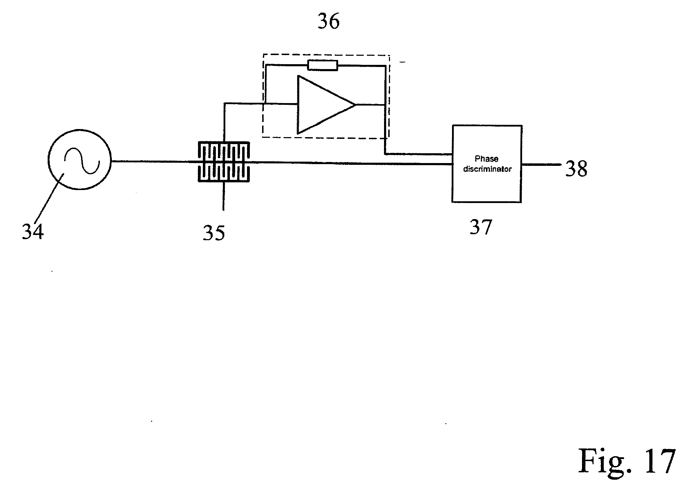

The basic aim is to let the comb drive actuator resonate by adjusting a voltage controlled oscillator 30 as given in figure 16a). The feedback (used for the control of 30) is obtained by monitoring the phase between the excitation signal and the comb drive actuator displacement, which is given by the comb drive actuator element 31 (see below). At the resonance frequency, this phase shift is -$\pi$/2. This point is used as operating point. The phase is measured by using a phase discriminator (see reference numeral 37 in figure 17).

Driving the MEMS 7 in his resonance frequency will let the MEMS oscillate with the maximum amplitude. This gives the highest resolution. Figure 16b) shows the basic signal flow of the system. The main part of the system is the VCO (voltage controlled oscillator) generating a square signal to stimulate the MEMS at the resonance frequency. This part can be considered as the actuation.

The 200kHz oscillator is needed to measure the position of the MEMS. The phase comparator 1 will measure the position using the phase shift generated by the differentiator and output a signal proportional to the position. This phase shift is a function of the capacity given by the position of the moving MEMS.

Both signals must be added to drive the single MEMS. This can be done with an adder. Before the square wave can be added to the sine wave, the square wave should be filtered by a low pass filter to avoid capacitive measurement disturbance. All frequencies above 250Hz are thus eliminated. The resulting signal is now a 217Hz filtered square signal with a superposed 200kHz sine wave. This signal stimulates the MEMS or more specifically, the fork 14 and the associated parts in the MEMS 7.

The MEMS is part of the differentiator which will generate a signal that can be compared with the 200kHz oscillator. The output of the phase difference (phase comparator 1) between these two signals gives the current position of fork of the MEMS. This voltage signal will oscillate at the same frequency as the VCO.

The transfer function of a resonating system has a phase shift of $\pi/2$. To be sure the fork 14 of the MEMS is swinging with the resonance frequency, the phase shift between the signal obtained by phase comparator 1 and the actuation signal must be $\pi/2$. An additional phase comparator 2 measures this phase shift and adjusts the VCO's frequency to keep the MEMS in its resonance frequency.

200kHz oscillator: This block generates a sine wave with a frequency fixed to 200kHz Voltage controlled oscillator (VCO) with fc=217Hz: The centre frequency $f_c$ should be set to 217Hz, which is approximately the resonance frequency of the fork of the MEMS. The exact frequency will be regulated by the feedback signal coming out of the phase comparator 2. The VCO signal can be either a sine, a triangle of a square. To eliminate the higher frequencies a low pass filter should be added at the VCO's output, except a PLL that generates a sine wave can be found.

Low pass filter (LP): In order not to have peaks in the signal coming out of the differentiator, the square wave coming out of the VCO must be filtered. The cut-off frequency of this filter should be chosen in a way, such that the peaks in the signal coming out of the differentiator are as small as possible. The attenuation is normally no problem as this signal will be multiplied in the next block and can be adjusted to the needed amplitude. Based on simulations this filter should be at least a second order low pass.

Multiplier and adder: In this block the driving signal coming out of the LP and the sine wave are multiplied by different factor and added. With the multiplication, the amplitude of the two signals can be adjusted the way that the sine wave will not saturate the differentiator. Normally the sine wave will be small and the square wave big because the transfer function of the differentiator will amplify the signal with the frequency corresponding to the phase zero shift.

MEMS $\rightarrow$ differentiator: The signal coming out of the adder block directly drives the fork of the MEMS. The small high frequent sine wave has no effect on the movement of the fork, because the moment of inertia of the fork of the MEMS represents a kind of mechanical low pass. The square wave will drive the MEMS at around 217 Hz.

The capacity of the MEMS can be used as a component to build the differentiator. The peak of the amplitude can be set through the resistor/capacitor combination.

The capacitor is fixed by the MEMS, so the only way to adjust this transfer function is the resistor value. The phase shift at 200kHz is zero. When the capacity changes due to a movement of the MEMS, the transfer function and so the phase shift for the frequency 200kHz will change. This gives a proportionality between the capacity and the phase shift at 200kHz. As the capacity is proportional to the movement, this leads to a proportionality between the phase shift and the movement.

This phase shift can be measured with the phase comparator 1.

The second interesting thing about this differentiator is the attenuation for lower frequencies. This nearly eliminates the square wave. So the signal received from this differentiator is the sine wave with a phase shift, that depends on the position of the MEMS. Due to electrical constraints, it could be that this sine wave has a dc offset, which can be eliminated by the following HP.

High pass (HP): This high pass is needed to filter out the dc offset. The 3dB frequency should be set low enough to not add a to large phase shift to the signal.

Phase comparator 1: The optioned sine wave can now be compared with the sine wave generated in block. The result should be a signal that oscillates with the frequency of the driving signal. If the system is correctly calibrated, the signal will be zero, when the MEMS passes the mid position.

Phase comparator 2: With the comparison of the signal coming out of the phase comparator 1 and the driving square wave, a new signal, that can be fed back to the VCO, is generated. A phase shift of 90˚ will signal that the MEMS is oscillating in resonance.

Possible realisation

200kHz oscillator: The generation of the sine wave can be made with a XR8038 (EXAR, US). This component can be configured via additional external components to oscillate at the needed frequency.

Voltage controlled oscillator (VCO) with $f_c$=217Hz: For the square wave a XR2212 can be used (EXAR, US). This component contains the VCO and a phase detector.

Low pass filter (LP): Looking at the different possibilities of constructing a filter, the first question is, which order is needed to eliminate as much of the peaks generated by the differentiator as possible. The $f_c$ of this filter can be set to 200Hz in order to have a clean signal behind the high pass described below.

Multiplier and adder: To bring both signal together they must be multiplied with the right factor, so that they have the correct dimension. Electrically this can be achieved with an adder. In this configuration the adder multiplies the signals and adds them together. In this configuration, the adder also adds a phase shift of 180˚.

MEMS → differentiator: The to differentiator will add a DC negative offset due to the virtual ground, that must be tied to -16V to fit the MEMS needs. As it is an inverting differentiator a 180˚ phase shift is added to the signal.

High pass (HP): The HP is needed to eliminate the DC offset, fed in by the differentiator. For the HP a passive first order HP is suitable. To better eliminate the peaks and obtain a better signal there should be chosen a second order active low pass filter as described above. This will filter out the peak totally.

Phase comparator 1: Looking at the high frequency sine wave that is generated by the XR-8038 and the output of the HP, one notices that there is a phase shift. These two signals can be compared using a phase comparator. The signal generated by this phase comparator will oscillate at the frequency at which the MEMS is moving.

Another important thing is to keep track of the position of the mirrors of the comb drive actuator. The position is obtained by monitoring the capacitance at the comb drive actuator; indeed, capacitance and mirror position are closely related (can also be calibrated, if necessary, see above).

The principle of the capacitance measurement is based on the use of a differentiator 36. In the differentiator circuit, the capacitance corresponds to the comb drive actuator 35 capacitance to be measured. A voltage oscillator 34 inserts a small signal through the comb drive actuator. The voltage oscillator 34 has a frequency close to the frequency of maximal gain of the circuit, where the electrical resonance occurs; in fact, at that frequency, the phase is most sensitive to the capacitance variation. In practice, one chooses such an electrical resonance frequency at a much higher frequency than the mechanical resonance frequency of the comb drive actuator, in order to have no influence upon the actuation. As a result, the phase between the input signal from 35 and the output signal of 36 will vary according to the capacitance change. The phase measurement 37 converts those changes into a measurable signal 38.

REFERENCES

1. O. Manzardo, "Micro-sized Fourier spectrometers", (Ph.D. dissertation (University of Neuchâtel, Neuchâtel, Switzerland, 2002).

2. S. D. Collins, R. L. Smith, C. Gonzàles, K. P. Stewart, J. G. Hagopian, and J. M. Sirota, "Fourier-transform optical microsystems", Opt. Lett. 24, 844 (1999).

3. O. Manzardo, H. P. Herzig, C. R. Marxer, and N. F. de Rooij, "Miniaturized time-scanning Fourier transform spectrometer based on silicon technology", Opt. Lett. 24, 1705-1707 (1999).

4. H. L. Kung, A. Bhatnagar, and D. A. B. Miller, "transform spectrometer based on measuring the periodicity of Talbot self-images", Opt. Lett. 26, 1645 (2001).

5. H. L. Kung, S. R. Bhalotra, J. D. Mansell, D. A. B. Miller, and J. S. Harris, "Standing-wave transform spectrometer based on integrated MEMS mirror and thin-film photodetector", IEEE J. Selec. Top. Quant. Electr. 8, 98 (2002).

6. J. Strong, and G. A. Vanasse, "Lamellar grating far-infrared interferometer", J. Opt. Soc. Am. 50, 113-118 (1960).

7. J. E. Chamberlain, The principles of interferometric spectroscopy (J. Wiley & Sons, New York, 1979).

8. W. Noell, P.-A. Clerc, L. Dellmann, B. Guldimann, H. P. Herzig, O. Manzardo, C. R. Marxer, K. J. Weible, R. Dändliker, and N. F. de Rooij, "Applications of SOI-based optical MEMS", IEEE J. Selec. Top. Quant. Electr. 8, 148 (2002).

LIST OF REFERENCE NUMERALS

1       white light source
2       collimation optics
3       sample cuvette
4       detector
5       reference detector

6 MEMS holder
7 MEMS
8 reference light source
9 mirror
10 light paths between MEMS and mirror
11 grating
12 stationary reflecting elements of 11
13 moveable reflecting elements of 11
14 fork
15 suspension of 14
16 driving comb
17 fibre in
18 fibre out
19 spring element
20 central axis element
21 light beam from 17 to mirror
22 light beam from mirror to grating
23 light beam from mirror to 18
24 grating on opposite side for reference
25 raw mirror block
26 machining tool
27 edge of 26
28 parabolic y-contour of mirror
29 planing chip
30 voltage controlled oscillator
31 comb drive actuator element
32 position measurement
33 phase detection
34 oscillator
35 comb drive actuator
36 differentiator
37 phase detection
38 output

The disclosure also comprises:

1. Lamellar grating interferometer comprising first means for collimating a light beam and second means for focusing a.light beam onto the grating.
2. Interferometer according to items 1, wherein the light beam is focused substantially in the form of a line onto the grating.
3. Interferometer according to any of the preceding items, wherein the interferometer is based on MEMS technology using a single silicone substrate and comprises a straight row of equally spaced reflection elements, half of which are static and half of which are moveable in a direction substantially perpendicularly to the direction of the row.
4. Interferometer according to item 3, wherein the period of the grating is in the range of 2 - 1000 $\mu$m, preferably in the range of 10 - 200 $\mu$m, most preferably in the range of 50 - 120 $\mu$m.
5. Interferometer according to one of the preceding items, wherein a single mirror is used for collimating the light beam for focusing a light beam onto the grating.
6. Interferometer according to item 5, wherein the same mirror is used for coupling the light onto the lamellar grating interferometer and for collecting light reflected from the lamellar grating interferometer for subsequent detection of the spectrum.
7. Interferometer according to item 6, wherein the light source, preferably in the form of a multimode fibre, is located substantially just below or above the row of the grating, and preferably as centred as possible with respect to said row, and wherein the light reflected from the grating and collected by the mirror is coupled into a multimode fibre, is preferably located substantially just below or above the row of the grating and preferably as centred as possible with respect to said row.
8. Interferometer according to item 6 or 7, wherein the mirror is located at a distance d from the grating, wherein the mirror has a focal length of approximately f=d in the sagittal plane and a curvature radius of approximately R=2d or a parabolic curvature to avoid spherical aberrations defined as z= ½ y$^2$/R.

9. Interferometer according to one of items 6 - 8, wherein the mirror is located at a distance d from the grating, wherein in the sagittal plane the mirror has a curvature radius R of approximately R=2d or a parabolic curvature to avoid spherical aberrations defined as z= ½ $y^2$/R.

10. Interferometer according to item 8, wherein the mirror is located at a distance d from the grating, and wherein in the tangential plane the mirror has a curvature radius R of approximately R=d.

11. Interferometer according to one of items 1 - 4, wherein at least two lenses, a first one of these at least two lenses being used for collimating a light beam and a second one of these two lenses being used for focusing the light beam.

12. Interferometer according to item 11, wherein the second lens is a cylindrical lens.

13. Interferometer according to any of the preceding items, wherein the interferometer comprises a straight row of equally spaced reflection elements with a height in the tangential plane in the range of 10-500 $\mu$m, preferably in the range of 50-150$\mu$m.

14. Interferometer according to any of the preceding items, wherein the moveable reflection elements of the grating are provided in the form of a fork, which is driven based on electrostatic forces, and wherein said fork preferably has a mass in the range of $10^{-4}$ - $10^{-6}$ kg.

15. Interferometer according to item 14, wherein the fork is driven such as to oscillate substantially with its resonance frequency.

16. Interferometer according to item 15, wherein the fork is freely suspended with a force constant in the range of 0.1 - 1000 N/m.

17. Interferometer according to item 15 or 16, wherein the resonance frequency is in the range of 100 - 400 Hz, preferably in the range of 150 to 250 Hz.

18. Interferometer according to one of the items 15 to 17, wherein the longitudinal displacement of the fork is in the range of 10 - 1000 $\mu$m, preferably in the range of 50 to 300 $\mu$m, most preferably in the range of 100 to 200 $\mu$m.

19. Interferometer according to any of the preceding items, wherein for calibration a second grating is provided, which is preferably mechanically coupled to the first grating, and wherein this second grating is irradiated with a reference light source.

20. Interferometer according to items 19, wherein the movable parts of the first and second grating are provided as a one-piece element of a micromechanical device, the first grating facing the opposite side of the second grating of the device, and wherein between the gratings symmetrically fork like elements are provided for electrostatic displacement of the movable one-piece element.

21. Interferometer according to any of the preceding items, wherein at least one first multimode fibre is provided into which the light collected from a probe to be analysed is collimated and focused, wherein one single mirror is provided for subsequently collimating and focusing said light onto the grating and for collimating and focusing the light reflected from the grating, and wherein a second multimode fibre is provided, into which the collimated and focused light reflected from the grating is coupled for leading it to a detector, wherein at the ends facing the mirror preferentially the first and second multimode fibre are arranged substantially parallel to each other and preferably substantially adjacent to each other either just below or above the row of the grating and centred with respect to said grating.

22. Use of an interferometer according to any of the preceding items in a spectrometer.

23. Method for analyzing wavelengths with an interferometer according to any of the preceding items, wherein light is collimated and then focused.

**Claims**

1. Lamellar grating interferometer, especially for use in a spectrometer, comprising a binary grating (11) with front facets and back facets, the front facets being a series of fixed mirrors and the back facets being a series of movable mirrors, wherein a wavefront of a light beam is separated such that one half of the light beam is reflected by the front facets and one half of the light beam is reflected by the back facets, the interferometer further comprising first means for collimating the light beam and second means for focusing the light beam onto the grating, wherein a single mirror (9) is used for collimating the light beam and for focusing the light beam onto the grating (11).

2. Interferometer according to claim 1, wherein the same mirror (9) is used for coupling the light onto the binary grating (11) and for collecting light reflected from the binary grating (11) for subsequent detection of the spectrum.

3. Interferometer according to claim 2, wherein a light source, preferably in the form of a first multimode fibre (17), is located substantially just below or above a row of the binary grating (11), and preferably as centred as possible with respect to said row, and wherein the light reflected from the grating (11) and collected by the mirror (9) is coupled into a second multimode fibre (18), is preferably located substantially just below or above the row of the grating (11) and preferably as centred as possible with respect to said row (11), wherein the period of the grating (11) is preferably in the range of 2 - 1000 $\mu$m, more preferably in the range of 10 - 200 $\mu$m and most preferably in the range of 50 - 120 $\mu$m.

4. Interferometer according to claim 2 or 3, wherein the mirror (9) is located at a distance d from the grating (11), wherein the mirror (9) has a focal length of approximately f=d in the sagittal plane and a curvature radius of approximately R=2d or a parabolic curvature to avoid spherical aberrations defined as z= ½ $y^2$/R.

5. Interferometer according to one of claims 2 to 4, wherein the mirror (9) is located at a distance d from the grating (11), wherein in the sagittal plane the mirror (9) has a curvature radius R of approximately R=2d or a parabolic curvature to avoid spherical aberrations defined as z= ½ $y^2$/R.

6. Interferometer according to claim 4, wherein the mirror (9) is located at a distance d from the grating (11), and wherein in the tangential plane the mirror (9) has a curvature radius R of approximately R=d.

7. Interferometer according to one of claims 1 to 6 , wherein at least one first multimode fibre (17) is provided into which the light collected from a probe to be analysed is collimated and focused, wherein the single mirror (9) is provided for subsequently collimating and focusing said light onto the grating (11) and for collimating and focusing the light reflected from the grating (11), and wherein a second multimode fibre (18) is provided, into which the collimated and focused light reflected from the grating (11) is coupled for leading it to a detector (4), wherein at the ends facing the mirror (11) preferentially the first and second multimode fibre (17, 18) are arranged substantially parallel to each other and preferably substantially adjacent to each other either just below or above a row of the grating (11) and centred with respect to said grating (11).

8. Interferometer according to one of claims 1 to 7, wherein the light beam is focused substantially in the form of a line onto the grating (11).

9. Interferometer according to any of the preceding claims, wherein the interferometer is based on MEMS technology using a single silicone substrate and comprises a straight row of equally spaced reflection elements, half of which are static and half of which are moveable in a direction substantially perpendicularly to the direction of the row.

10. Interferometer according to any of the preceding claims, wherein the interferometer comprises a straight row of equally spaced reflection elements with a height in the tangential plane in the range of 10-500 $\mu$m, preferably in the range of 50-150$\mu$m.

11. Interferometer according to any of the preceding claims, wherein the moveable reflection elements of the grating are provided in the form of a fork, which is driven based on electrostatic forces and wherein the fork is driven such as to oscillate substantially with its resonance frequency, and wherein said fork preferably has a mass in the range of $10^{-4}$ - $10^{-6}$ kg.

12. Interferometer according to claim 11, wherein the fork is freely suspended with a force constant in the range of 0.1 - 1000 N/m.

13. Interferometer according to claim 11 or 12, wherein the resonance frequency is in the range of 100 - 400 Hz, preferably in the range of 150 to 250 Hz.

14. Interferometer according to one of the claims 11 to 13, wherein the longitudinal displacement of the fork is in the range of 10 - 1000 $\mu$m, preferably in the range of 50 to 300 $\mu$m, most preferably in the range of 100 to 200 $\mu$m.

15. Interferometer according to any of the preceding claims, wherein a second grating (24) is provided, which is preferably mechanically coupled to the first grating (11), and wherein this second grating (24) is irradiated with a reference light source (8), wherein the movable parts of the first and second grating (11, 24) are provided as a one-piece element of a micromechanical device (7), the first grating (11) facing the opposite side of the second grating (24) of the device (7), and wherein between the gratings (11, 24) symmetrically fork like elements (14) are provided for electrostatic displacement of the movable one-piece element.

Fig. 1

Fig. 2

Fig. 3

Fig. 4

Fig. 5

Fig. 6

EP 2 275 789 A1

Fig. 7

Fig. 8

Fig. 9

Fig. 10

a)

b)

c)

Fig. 11

EP 2 275 789 A1

EP 2 275 789 A1

a)

b)

Fig. 12

Fig. 13

a)

b)

1.

2.

3.

Fig. 14

EP 2 275 789 A1

EP 2 275 789 A1

a)

b)

Fig. 15

a)

Amplitude (displacement)

Frequency

Phase

VCO

30

31

Position

Voltage

32

Phase
discriminator

33

b)

oscillator
200 kHz
sine

Phase
Comparator 1

multiplier
neg. adder

differentiator
MEMS

HP

VCO
fc=217 Hz
rect

LP

Phase
Comparator 2

Fig. 16

Fig. 17

Europäisches
Patentamt
European
Patent Office
Office européen
des brevets

## EUROPEAN SEARCH REPORT

Application Number

EP 10 18 5766

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRUELEMANS P ET AL: "WAVE-FRONT-DIVIDING CIRCULAR-REFLECTOR INTERFEROMETER FOR THE FAR INFRARED" APPLIED OPTICS, OPTICAL SOCIETY OF AMERICA,WASHINGTON, US, vol. 35, no. 22, 1 August 1996 (1996-08-01), pages 4337-4342, XP000623800 ISSN: 0003-6935 | 1-7 | INV. G01J3/453 G01B9/02 |
| Y | * paragraph [0002]; figure 1 * ----- | 8-15 | |
| X | SAKAI K ET AL: "High-resolution lamellar-grating Fourier-transform spectrometer for the submillimeter region" APPLIED OPTICS USA, vol. 17, no. 11, 1 June 1978 (1978-06-01), pages 1709-1715, XP002610335 ISSN: 0003-6935 | 1,2,4-6 | |
| Y | * figure 1 * ----- | 8-15 | |
| X | MILWARD ET AL: "A small lamellar grating interferometer for the very far-infrared" INFRARED PHYSICS, PERGAMON LNKD-DOI:10.1016/0020-0891(69)90012-8, vol. 9, no. 2, 1 July 1969 (1969-07-01), pages 59-64,IN1, XP024583205 ISSN: 0020-0891 [retrieved on 1969-07-01] | 1,2,4-6 | TECHNICAL FIELDS SEARCHED (IPC) G01J G01B |
| Y | * figure 1 * ----- | 8-15 | |
| Y,O | O. MANZARDO: "Infrared MEMS-based lamellar grating spectrometer" SPIE CONFERENCE: MEMS, MOEMS, AND MICROMACHINING, no. 5455, 29 April 2004 (2004-04-29), XP002342373 STRASBOURG, FRANCE * the whole document * -/-- | 9-14 | |

The present search report has been drawn up for all claims

| Place of search | Date of completion of the search | Examiner |
|---|---|---|
| Munich | 19 November 2010 | Rödig, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 10 18 5766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,P | & O. MANZARDO ET AL.: "Infrared MEMS-based lamellar grating spectrometer" MEMS, MOEMS, AND MICROMACHINING 29-30 APRIL 2004 STRASBOURG, FRANCE, vol. 5455, no. 1, August 2004 (2004-08), pages 1-8, Proceedings of the SPIE - The International Society for Optical Engineering SPIE-Int. Soc. Opt. Eng USA ISSN: 0277-786X ----- | 9-14 | |
| Y | O. MANZARDO ET AL.: "Micro-fabricated Spectral Analysers" 19TH CONGRESS OF THE INTERNATIONAL COMMISSION FOR OPTICS: OPTICS FOR QUALITY OF LIFE, vol. 4829, 2003, pages 841-843, XP002342374 Proceedings of the SPIE - The International Society for Optical Engineering SPIE-Int. Soc. Opt. Eng USA | 8-15 | |
| A | * figure 3a * ----- | 4,7 | TECHNICAL FIELDS SEARCHED (IPC) |

The present search report has been drawn up for all claims

| Place of search | Date of completion of the search | Examiner |
|---|---|---|
| Munich | 19 November 2010 | Rödig, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 10 18 5766

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 18 5766

The Search Division considers that the present European patent application does not comply with the requirements of unity of invention and relates to several inventions or groups of inventions, namely:

1. claims: 1-8

   details of the beam path and the optical components of an interferometer
   ---

2. claims: 1, 9-14

   design of a lamellar grating interferometer
   ---

3. claims: 1, 15

   device comprising two lamellar grating interferometers
   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of the Optical Society of America,* vol. 50 (2), 113
- **O. Manzardo.** *Micro-sized Fourier spectrometers,* 2002
- **S. D. Collins ; R. L. Smith ; C. Gonzàles ; K. P. Stewart ; J. G. Hagopian ; J. M. Sirota.** Fourier-transform optical microsystems. *Opt. Lett.,* 1999, vol. 24, 844
- **O. Manzardo ; H. P. Herzig ; C. R. Marxer ; N. F. de Rooij.** Miniaturized time-scanning Fourier transform spectrometer based on silicon technology. *Opt. Lett.,* 1999, vol. 24, 1705-1707
- **H. L. Kung ; A. Bhatnagar ; D. A. B. Miller.** transform spectrometer based on measuring the periodicity of Talbot self-images. *Opt. Lett.,* 2001, vol. 26, 1645
- **H. L. Kung ; S. R. Bhalotra ; J. D. Mansell ; D. A. B. Miller ; J. S. Harris.** Standing-wave transform spectrometer based on integrated MEMS mirror and thin-film photodetector. *IEEE J. Selec. Top. Quant. Electr.,* 2002, vol. 8, 98
- **J. Strong ; G. A. Vanasse.** Lamellar grating far-infrared interferometer. *J. Opt. Soc. Am.,* 1960, vol. 50, 113-118
- **J. E. Chamberlain.** The principles of interferometric spectroscopy. J. Wiley & Sons, 1979
- **W. Noell, P.-A. ; Clerc, L. ; Dellmann, B. ; Guldimann, H. P. ; Herzig, O. ; Manzardo, C. ; R. Marxer ; K. J. Weible ; R. Dändliker ; N. F. de Rooij.** Applications of SOI-based optical MEMS. *IEEE J. Selec. Top. Quant. Electr.,* 2002, vol. 8, 148